Europäisches Patentamt

European Patent Office

Office européen des brevets

(19)

(11) Publication number: **0 046 362**
**A1**

# (12) EUROPEAN PATENT APPLICATION

(21) Application number: **81303646.4**

(22) Date of filing: **10.08.81**

(51) Int. Cl.³: **B 05 D 5/00, F 16 L 58/10**

(30) Priority: **14.08.80 US 178168**

(43) Date of publication of application: **24.02.82**
Bulletin 82/8

(84) Designated Contracting States: **AT BE CH DE FR GB IT
LI NL SE**

(71) Applicant: **GENERAL SIGNAL CORPORATION, High
Ridge Park, Stamford Connecticut 06904 (US)**

(72) Inventor: **Slama, William R., 28760 Jenkins Road, North
Olstead Ohio 44070 (US)**
Inventor: **Semanisin, Dale J., 10301 Loretta Avenue,
Cleveland Ohio 44111 (US)**
Inventor: **Washburn, Robert B., 16610 Sedalia Avenue,
Cleveland Ohio 44135 (US)**

(74) Representative: **Austin, Hedley William et ai, A.A.
THORNTON & CO. Northumberland House 303-306 High
Holborn, London WC1V 7LE (GB)**

(54) Corrosion resistant coated substrates.

(57) The substrates, such as this interior surfaces of chimney
liners, flue ducts and scrubbers, are rendered corrosion-resis-
tant by application of a multilayer coating. The multi-layer coat-
ing comprises a primer layer of thermosetting polymer, an in-
termediate layer comprising a thermosetting polymer and sili-
ceous filler, a further intermediate layer of a thermo-setting po-
lymer and a non-siliceous filler, and an outer layer of a fluoroelastomer and a non-siliceous filler.

The improvement over the multi-layer coating of Euro-
pean Patent Application Publication 10853 is in the further in-
termediate layer, which provides significantly enhanced chemi-
cal resistance and thermal stability.

CARBON-FILLED
FLUOROELASTOMER 10-50 mils
CARBON-FILLED
VINYL ESTER 10-15 mils
GLASS FLAKE-FILLED
VINYL ESTER 20-80 mils
POLYESTER PRIMER
COATING 1·5 mils
METAL OR CONCRETE

- 1 -

## Corrosion-resistant coated substrates

The present invention is concerned with corrosion-resistant coated substrates, such as internally coated chimney liners, flue ducts and scrubbers.

In particular, the present invention comprises an improvement in the coated substrates described in our European Patent Application 0010853, which describes substrates having coated thereon, in the order specified, a primer layer of a first thermosetting polymer, an intermediate layer comprising a second thermosetting polymer and a filler and an outer layer comprising a fluoroelastomer and a filler. Among the fillers described for use in the intermediate layer are silica, glass wool, glass flakes and mica flakes (all of which are siliceous) and carbon (which is, of course, non-siliceous). The same fillers are disclosed for use in the outer layer, but in one specific embodiment, the filler in the intermediate layer is glass flakes and the filler in the outer layer is carbon.

We have now found that if an intermediate layer containing a siliceous filler and an outer layer containing a non-siliceous filler are provided, then significantly enhanced chemical resistance and thermal stability can be obtained if a further layer is provided between the intermediate layer and the outer layer, the

- 2 -

further layer comprising a thermosetting polymer (which may be the same as the thermosetting polymer in the intermediate layer or different thereto) and a non-siliceous filler.

The non-siliceous filler is preferably carbon or a non-siliceous inorganic oxide, such as alumina.

The thermosetting polymer present in the further layer between the intermediate layer and the outer layer is preferably a vinyl ester polymer, a polyester or an epoxy, furan, phenolic or urethane resin. A vinyl ester polymer is most preferred.

The thermosetting polymer present in the further layer is preferably unsaturated and cross-linked by means of an ethylenically unsaturated monomer, such as styrene, an acrylate monomer or a methacrylate monomer; a preferred polymer/monomer combination is an unsaturated vinyl ester polymer cross-linked by means of styrene.

The composition of the above-mentioned intermediate layer is generally similar to the composition of the further layer, except that it contains a siliceous filler.

The siliceous filler may be any suitable reinforcing siliceous material, such as glass or mica flakes, silica particles, or glass wool. Glass flakes less than 0.4 mm (1/64 inch) long in any dimension are preferred; such flakes are available commercially from Owens Corning Fiberglass Corp., Toledo, Ohio.

The polymer present in the intermediate layer may be as described above with reference to the further layer; the intermediate layer preferably has a dry thickness of 5.08 to 20.3 microns (20 to 80 mils), while the further layer preferably has a dry thickness of 2.54 to 3.81 microns (10 to 15 mils).

The substrate which is coated according to the invention may be of metallic material (such as steel) or it may be of concrete or brick. The substrate may be a chimney liner, a tank, an expansion joint, a flue duct or a scrubber, or other zones which come into contact in use with corrosive materials, such as strong acids (particularly sulphuric acid). The coating layers employed according to the invention render the substrate resistant to attack by sulphuric acid and hydrochloric acid (and also to a limited extent against nitric acid) and also resistant to water, other chemicals, thermal degradation, and to mechanical and abrasive damage.

The substrate is generally first cleaned and roughened before application of the primer layer by, for example, acid etching or sand blasting. The primer layer is then applied to the substrate before any substantial oxidation can occur, thus ensuring strong adhesive bonding.

The primer layer is of a thermosetting polymer, as mentioned above. Preferably, the thermosetting polymer is an unsaturated thermosetting polymer, such as a polyester or a vinyl ester polymer. The primer layer preferably has a dry thickness of 0.25 to 1.27 microns (1 to 5 mils).

One or more intermediate layers of a thermosetting polymer and a siliceous filler are applied to the primer layer. The chemical properties of the thermosetting polymers employed in the primer layer and in the intermediate layer or layers are such that bonding occurs between the primer layer and the substrate and between the primer layer and the adjacent intermediate layer as well as between contiguous intermediate layers if more than one such layer is present.

The or each intermediate layer contains a thermosetting polymer, as mentioned above. For example, a vinyl ester in an amount in the range from 35% to 55% by weight is mixed with a vinyl monomer, for example, styrene, in an amount from 40% to 25% by weight and a siliceous filler, e.g., glass flakes, in an amount from 15% to 30%. The composition preferably also contains one or more thixotropic agents, such as fumed asbestos, fumed silica, or clay, in an amount less than 1%; glycerin or a similar polar compound in an amount from 0.04% to 0.08%; one or more pigments, particularly metallic oxides, such as titanium dioxide or lead oxide, in an amount from 1% to 4%; one or more catalysts, such as a peroxide (e.g., methylethyl ketone peroxide), in an amount from 1% to 4%; one or more promoters, such as amines or metallic soaps, in an amount from 0.05% to 0.5%; one or more inhibitors, such as catechols, quinones, and hydroquinones, in an amount from 0.01% to 0.1%; and one or more coupling agents, such as a silane, in an amount less than 1%. A composition containing all these ingredients has a limited "pot" life, and must be applied to the primer layer within a relatively short time, usually within about 30 minutes to about 2 hours.

The intermediate layer may be applied as a solution or dispersion in any conventional manner including rolling, brushing, trowelling, air-atomized spraying, or airless spraying. Typically, a dry thickness 2.54 to 10.15 microns (10 to 40 mils) is applied to the primer layer and then a second coat, also of thickness 2.54 to 10.15 microns, is applied, such that the resulting composite intermediate layer has a thickness of 5.08 to 20.3 microns (20 to 80 mils). This range of thickness provides the coated substrate with substantial protection from corrosion. Thus the intermediate layer provides substantial impermeability to sulphuric acid and a water permeability generally of only about 0.001 perm. inches. Thicknesses less than 3.81 microns (15 mils) generally do not provide adequate protection and thicknesses which are too great may result in a coating layer which, over time, tends to crack and flake off from the coated surface.

As mentioned above, more than one intermediate layer can be employed; each such layer preferably has a dry thickness of 5.08 to 20.3 microns (20 to 80 mils). Each of the intermediate layers may be identical or may vary in the polymer or siliceous filler present therein.

Over the outermost intermediate layer there is applied a further layer comprising a thermosetting polymer capable of bonding to the intermediate layer and a non-siliceous filler.

The further layer is generally produced in a similar way to that just described with reference to the intermediate layer; however, the further layer should, of course, contain a non-siliceous filler.

Finally, an outer layer of a fluoroelastomer and a non-siliceous filler is applied; the chemical properties of the fluoroelastomer employed are such that, upon curing, a chemical bond forms between the further layer and the fluoroelastomer outer layer.

The outer layer may be prepared as follows. A formulation is prepared which includes a fluoroelastomer, typically one having a molecular weight less than $2 \times 10^5$ (since presently available fluoroelastomers of higher molecular weight are insoluble and therefore unsuitable). Examples of suitable fluoroelastomers are Viton A-35 and B-50, manufactured by E.I. DuPont de Nemours & Co., Inc., Wilmington, Delaware, and Fluorel 2175 manufactured by the 3M Company, Minneapolis, Minnesota. Viton is the trademark for a series of fluoroelastomers based on copolymers of vinylidene fluoride and hexafluoropropylene. Fluorel is the trademark for a series of fully saturated, fluorinated polymers containing more than 60% fluorine by weight.

The fluoroelastomer may be mixed in an amount from 25% to 60% by weight with a non-siliceous, reinforcing filler such as carbon or an inorganic oxide, e.g., aluminium oxide (carbon being preferred). The size of the filler particles should preferably not exceed 0.4 mm (1/64") in any dimension. The non-siliceous filler is generally present in the formulation in an amount from 10% to 30% by weight. Also desirably included in the formulation are one or more acid acceptors (such as lead oxide) which are capable of reacting with hydrofluoric acid produced during curing of the elastomer, generally in an amount from 3% to 15% by weight. One or more curing agents, such as amines, diamines, peroxides, bis-phenols or azo compounds, in an amount less than 10% by weight; one or more pigments, such as oxides of titanium, in an amount less than 10%; and one or more water-reactive compounds, such as calcium oxide or magnesium oxide (to react with water produced during curing of the elastomer) are also desirably included. When the fluoroelastomer is Viton A-35 or B-50 as described above, the preferred curing agent is Diak No. 3 which is also manufactured by DuPont for use with the Viton series of fluoroelastomers.

The fluoroelastomer, non-siliceous filler, and other components are mixed, milled, and pulverized. Solvent is then added. Useful solvents include organic acetates, such as n-butyl acetate and amyl acetate, ketones, and esters. When the fluoroelastomer used is Viton A-35, a solvent mixture of n-butyl acetate and amyl acetate in the ratio of about 4 parts n-butyl acetate per part amyl acetate is particularly useful. The outer layer composition so prepared may then be applied as a solution or dispersion to the further layer, typically in a dry thickness of 2.54 to 12.7 microns (10 to 50 mils), using conventional techniques such as those described for applying the intermediate layer.

After a period of time, typically one day to one week, wherein the solvent is released, the entire composite coating may be heat cured at a temperature from 121 to 149°C (250° to 500°F) generally for at least about 3 hours preferably for at least about 8 hours. The resulting outer fluoroelastomer layer is permeable to sulphuric acid, but protects the inner coating layer from the corrosive effects of concentrated sulphuric acid. The outer layer also provides abrasion resistance.

In the following Examples and Comparative Examples (given by way of illustration only) reference will be made to the accompanying drawings, in which:

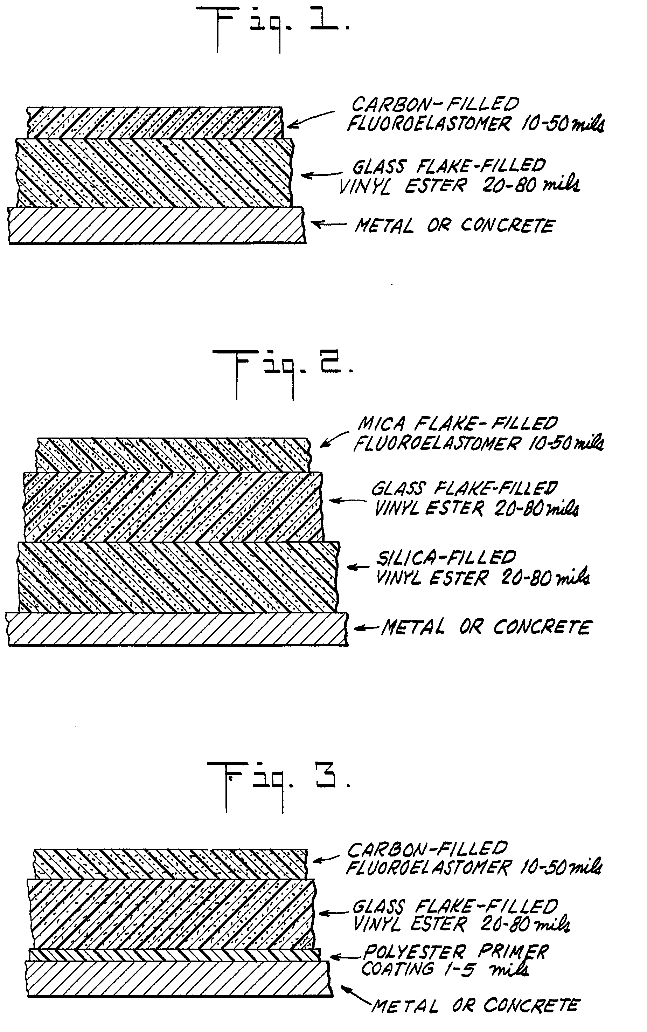

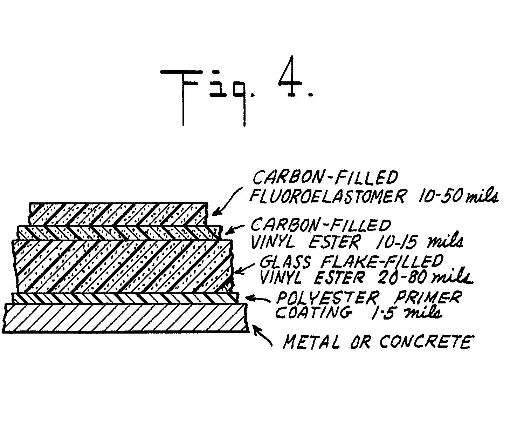

Figures 1 to 3 are cross-sections of coated substrates as described and illustrated in the above-mentioned European Patent Application 0010853; and

Figure 4 is a cross-section of a coated substrate according to the present invention. Specifically, Figure 4 illustrates a metal or concrete substrate having thereon a polyester primer layer of dry thickness 0.25 to 1.27 microns (1 to 5 mils), an intermediate layer of glass flake filled vinyl ester polymer of dry thickness 5.08 to 20.3 microns (20 to 80 mils), a further layer of carbon-filled vinyl ester polymer of dry thickness 2.54 to 3.81 microns (10 to 15 mils) and an outer layer of carbon-filled fluoroelastomer of dry thickness 2.54 to 12.7 microns (10 to 50 mils).

Comparative Example 1

A steel panel was sandblasted and then a coating of fluoroelastomer was applied over the surface to produce a coating layer having a dry thickness of 7.62 microns (30 mils). The chemical resistance of the protective coating layer was then evaluated by the Atlas Test Cell Evaluation (ASTM Test C 868). The coated steel panels were placed in contact with a vapour containing distilled water at 82°C (180°F).

After two weeks the steel panels were removed from contact with the vapour and examined. The coating layer was blistered and could be readily peeled off the steel panel. The steel panel itself showed visible indications of oxidation.

Comparative Example 2

Following the same procedure as in Comparative Example 1, steel panels were covered with a multi-layer coating such as is shown in Figure 1. Periodically, over a period of several months, the steel panels were removed from contact with the water-containing vapour and examined. No evidence of blistering or damage to the coating layer was found, nor was there any evidence of oxidation of the surface of the steel panel.

Comparative Example 3

Following the same procedure as set forth in Comparative Example 1, steel panels were covered with a multi-layer coating such as is shown in Figure 3, and evaluated by the same procedure. During several months, the panels were periodically removed from contact with the vapour and examined. No evidence of blistering or peeling of the coating was noted, nor was there any indication of corrosion of the steel panel surfaces.

Comparative Example 4

Steel panels which had been covered with a multi-layer coating as shown in Figure 1 were installed as part of the chimney lining at a power plant burning fossil fuels. The panels were periodically examined over four months. Some minor blistering of the coating composition was observed, although the coating continued to adhere to the panels. There was no indication of oxidation of the steel panels.

Comparative Example 5

Steel panels covered with a multi-layer coating as shown in Figure 3 were also installed at the same power plant as in Comparative Example 4 and periodically examined. After four months, no evidence of any blistering or other deterioration of the coating layer was evident. There was no indication of any corrosion of the steel panels.

Comparative Example 6

Steel panels covered with a coating layer of glass flake-filled vinyl ester were also installed at the same power plant as in Comparative Examples 4 and 5 and periodically examined. After four months, major blistering of the coating was observed and large patches of coating material could be readily removed from the steel panels. There was significant corrosion of the underlying panels.

Comparative Example 7

The water vapour transmission of a carbon-filled fluoroelastomer was determined using the water vapour transmission test (ASTM Test E 96). The average permeability of several samples was determined to be 0.001 perm-inches. The same filled fluoroelastomer was applied to a glass flake-filled vinyl ester layer on a steel panel, which was then tested. The average permeability of a series of samples was 0.0007 perm-inches indicating a reduction in water vapour permeability of 30%.

Comparative Example 8

Steel panels were covered with coatings to produce coated articles as shown in Figure 3. The chemical resistance of the protective coating was then evaluated by partially immersing the panels in concentrated sulphuric acid. Over a period of several months, visual inspections of these panels showed that the coating began to blister. On evaluation by the Atlas Test Cell Evaluation (ASTM Test C868) with de-ionized water at 71°C (160°F), and periodical removal of the panels for examination (over several months), blistering was also observed. Finally, when such a panel was placed in an oven at 204°C (400°F) and periodically evaluated, the coating began to lose adhesion after a few months.

Example

Comparative Example 8 was repeated, except that the coated panel was as shown in Figure 4.

No blistering was observed in the water and sulphuric acid tests, and no loss of adhesion was observed in the thermal test.

CLAIMS

1.    A corrosion-resistant coated substrate which
comprises a substrate having coated thereon, in the order
specified, a primer layer of a first thermosetting polymer,
an intermediate layer comprising a second thermosetting
polymer and a siliceous filler, and an outer layer comprising a fluoroelastomer and a non-siliceous filler,
characterised in that there is a further layer between said
intermediate layer and said outer layer, said further
layer comprising a third thermosetting polymer, which may
be the same as the second thermosetting polymer or
different thereto, and a non-siliceous filler.

2.    A coated substrate according to claim 1, characterised
in that the non-siliceous filler is carbon or a non-
siliceous inorganic oxide.

3.    A coated substrate according to claim 1 or 2,
characterised in that the third thermosetting polymer is
a polyester, a vinyl ester polymer or an epoxy, furan,
phenolic or urethane resin.

4.    A coated substrate according to any of claims
1 to 3 in which the primer layer has a thickness of
0.25 to 1.27 microns, the intermediate layer has a
thickness of 5.08 to 20.3 microns and the outer layer
has a thickness of 2.54 to 12.7 microns, characterised in
that the further layer has a thickness of 2.54 to 3.81
microns.

**Fig. 1.**

CARBON-FILLED
FLUOROELASTOMER 10-50 mils

GLASS FLAKE-FILLED
VINYL ESTER 20-80 mils

METAL OR CONCRETE

**Fig. 2.**

MICA FLAKE-FILLED
FLUOROELASTOMER 10-50 mils

GLASS FLAKE-FILLED
VINYL ESTER 20-80 mils

SILICA-FILLED
VINYL ESTER 20-80 mils

METAL OR CONCRETE

**Fig. 3.**

CARBON-FILLED
FLUOROELASTOMER 10-50 mils

GLASS FLAKE-FILLED
VINYL ESTER 20-80 mils

POLYESTER PRIMER
COATING 1-5 mils

METAL OR CONCRETE

# Fig. 4.

CARBON-FILLED
FLUOROELASTOMER 10-50 mils

CARBON-FILLED
VINYL ESTER 10-15 mils

GLASS FLAKE-FILLED
VINYL ESTER 20-80 mils

POLYESTER PRIMER
COATING 1-5 mils

METAL OR CONCRETE

European Patent Office

**EUROPEAN SEARCH REPORT**

0046362
Application number

EP 81 30 3646

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| DA | EP - A - 0 010 853 (GENERAL SIGNAL CORP.) | | B 05 D 5/00 F 16 L 58/10 |
| A | US - A - 3 874 903 (T. WIRTH et al.) | | |
| A | FR - A - 2 223 184 (DU PONT) | | |
| A | BE - A - 763 759 (CENTRE NATIONAL DE RECHERCHES METALLURGIQUES) | | |

-----

**TECHNICAL FIELDS SEARCHED (Int. Cl.³)**

B 05 D 5/00
              7/16
F 16 L 58/10

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 18-11-1981 | VAN THIELEN |

EPO Form 1503.1  06.78